Europäisches Patentamt

European Patent Office

Office européen des brevets

(19)

(11) Veröffentlichungsnummer: **0 127 213**
**B1**

(12) **EUROPÄISCHE PATENTSCHRIFT**

(45) Veröffentlichungstag der Patentschrift:
**12.07.89**

(21) Anmeldenummer: **84200564.7**

(22) Anmeldetag: **19.04.84**

(51) Int. Cl.⁴: **F 24 F 1/02,** F 24 F 7/08,
F 24 F 3/00

(54) **Vorrichtung zum Belüften und Heizen von Innenräumen, insbesondere Wohnräumen.**

(30) Priorität: **28.04.83 DE 3315444**

(43) Veröffentlichungstag der Anmeldung:
**05.12.84 Patentblatt 84/49**

(45) Bekanntmachung des Hinweises auf die Patenterteilung:
**12.07.89 Patentblatt 89/28**

(84) Benannte Vertragsstaaten:
**DE FR GB IT SE**

(56) Entgegenhaltungen:
EP-A-0 029 573
EP-A-0 055 000
EP-A-0 091 643
DE-A-2 844 885

(73) Patentinhaber: **Philips Patentverwaltung GmbH,
Wendenstrasse 35 Postfach 10 51 49, D-2000
Hamburg 1 (DE)**
(84) Benannte Vertragsstaaten: **DE**

(73) Patentinhaber: **N.V. Philips' Gloeilampenfabrieken,
Groenewoudseweg 1, NL- 5621 BA Eindhoven (NL)**
(84) Benannte Vertragsstaaten: **FR GB IT SE**

(72) Erfinder: **Hörster, Horst, Dr., Vogelsangstrasse 11,
D-5106 Roetgen (DE)**
Erfinder: **Klinkenberg, Klaus, Waldstrasse 39,
D-5100 Aachen (DE)**

(74) Vertreter: **Kupfermann, Fritz- Joachim, Dipl.- Ing.,
Philips Patentverwaltung GmbH Wendenstrasse
35 Postfach 10 51 49, D-2000 Hamburg 1 (DE)**

EP 0 127 213 B1

## Beschreibung

Die Erfindung bezieht sich auf eine Vorrichtung zum Belüften und Heizen von Innenräumen, insbesondere Wohnräumen, mit von außen in den Innenraum und aus dem Innenraum nach außen führenden Frisch- und Abluftkanälen, in denen ein Luft/Luft-Wärmetauscher vorgesehen und die mit Gebläsen versehen sind, durch die Luft ein- und ausgeblasen wird, und mit einer Wärmepumpenvorrichtung mit einem Kondensator im Zuluftkanal und einem Verdampfer im Abluftkanal sowie einstellbaren Klappen, die auf einen reinen Luft/Luft-Wärmepumpenbetrieb ohne Luftaustausch von außen nach innen und umgekehrt oder einen Mischbetrieb aus Luftaustausch und Wärmepumpenbetrieb einstellbar sind, in dem sie vor und hinter dem Wärmeaustauscher über Nebenschlußöffnungen Nebenschlüsse und längs der Frisch- und Abluftkanäle den Durchlaß regeln, wobei die Nebenschlüsse von Öffnungen zwischen dem Frischluft- und Abluftkanal gebildet werden.

Eine derartige Vorrichtung ist aus der EP-A-55 000 bekannt. Dort ist ein !r Frischluftkanal vorgesehen, der durch einen Wärmetauscher hindurch von der Außenseite zum Innenraum führt. Ein Gebläse sorgt für die Strömung in dem Frischluftkanal. Ein Abluftkanal erstreckt sich vom Innenraum durch den Wärmetauscher nach draußen, und ein Gebläse in ihm saugt verbrauchte Luft aus dem Innenraum ab. In dem Abluftkanal ist vor dem Auslaß ein Verdampfer angeordnet, und in dem Frischluftkanal befindet sich vor dem Einlaß in den Innenraum ein Kondensator. Verdampfer und Kondensator sind Teile einer Wärmepumpenanlage. Durch verschiedene Klappen ist es möglich, beiderseits des Wärmetauschers zwischen Frisch- und Abluftkanal Nebenschlüsse zu erzeugen, und weitere Klappen sorgen dafür, daß Frischluft- und Abluftkanal auch gesperrt werden können. Auf diese Weise läßt sich die Vorrichtung in verschiedenen Betriebszuständen betreiben. In einem Betriebszustand findet ein reiner Wärmeaustausch über den Wärmeaustauscher statt, wenn frische Luft angesaugt und verbrauchte Luft abgeblasen wird. Durch das Öffnen der Nebenschlüsse und Verschließen der Frisch- und Abluftkanäle kann ein reiner Wärmepumpenbetrieb erreicht werden, in dem die Außenluft nur durch den Verdampfer geführt wird und die Innenluft nur durch den Kondensator. Bei diesem Heizbetrieb wird der umgewälzten Außenluft Wärme entzogen, und die entzogene Wärme wird über den Kondensator der umgewälzten Innenluft zugegeben. Bei offenen Nebenschlußöffnungen und auch offenen Frisch- und Abluftkanälen ergibt sich eine Art Mischbetrieb mit Lüften und gleichzeitigem Heizen.

Weiterhin weist die Vorrichtung nach der EP-A-55 000 einen Kreuzstromwärmetauscher auf, dessen Luftdurchfluß mittels der Klappen geregelt wird. Damit benötigt die Vorrichtung für die Einstellung der Luftwege, der Querschnitte von Frisch- und Abluftkanal und der Nebenschlüsse ein aufwendiges System von vier unabhängig voneinander ansteuerbaren Klappen. Da die Klappen entsprechend den gewünschten Funktionen einzeln verstellt werden, ergibt sich ein hoher Steuerungsaufwand mit einem sehr komplizierten Steuermechanismus.

Es ist Aufgabe der Erfindung, eine Vorrichtung der eingangs beschriebenen Art zu schafffen, bei der die Steuerung der verschiedenen Luftströmungen wesentlich vereinfacht ist.

Die gestellte Aufgabe ist erfindungsgemäß dadurch gelöst, daß

- nur je eine Klappe vor und eine Klappe hinter dem Wärmetauscher vorgesehen ist,
- die Klappen in einer Endlage den Wärmetauscher und in der anderen Endlage die Nebenschlußöffnungen vollständig schließen,
- die Klappen auf Zwischenstellungen einstellbar sind.

Mit Hilfe von nur zwei Klappen läßt sich auf diese Weise der Lüftungsbetrieb, der Heizungsbetrieb und der kombinierte Lüftungs- und Heizungsbetrieb verwirklichen. Die Anordnung von nur zwei Klappen vereinfacht sowohl die Konstruktion der Vorrichtung als auch die Ansteuerung der Klappen.

Nach einer weiteren Ausgestaltung der Erfindung ist vorgesehen, daß der Wärmetauscher ein Wärmerohraustauscher ist. Ein solcher Wärmerohraustauscher hat den großen Vorteil, daß er trotz kleiner Bauweise ohne sich bewegende Teile arbeitet. Auch dadurch wird eine Vereinfachung herbeigeführt bei kleiner Bauweise. In den Wärmerohren, deren warme Enden tiefer angeordnet sind als die kalten Enden, befindet sich eine verdampfbare Flüssigkeit, die durch die warme Abluft verdampft und durch die kalte Zuluft wieder kondensiert. Durch die Hintereinanderschaltung von mehreren separaten Rohrreihen wird die Querleitung innerhalb der Wärmetauscherlänge unterbunden, so daß zusammen mit den Ausströmungsrichtungen der Luft ein optimaler Gegenstromwärmetauscher mit entsprechend gutem Wärmerückgewinnungsgrad entsteht.

Aus der EP-A-29 573 ist es an sich bekannt, By-Pässe in einer eine Wand durchsetzenden zweikanaligen Lüftungsvorrichtung vorzusehen, die von den Zu- und Abluftströmen je einen Teil durch einen Wärmetauscher leiten beim Verstellen von Klappen. Die Restvolumina werden jedoch ständig weiter unmittelbar nach außen oder innen geleitet. Die Einsatzmöglichkeiten sind damit beschränkt.

Die Erfindung wird anhand des in der Zeichnung dargestellten Ausführungsbeispieles näher erläutert. Es zeigen:

Fig. 1 eine Seitenansicht der Vorrichtung mit Frischluft- und Ablaufkanal, Luft/Luft-Wärmepumpe und einem Wärmeaustauscher bei abgenommener Seitenwand,

Fig. 2 bis 4 die Vorrichtung mit verschiedenen Klappenstellungen zur Erläuterung der verschiedenne Betriebsarten.

In einem aufrechtstehenden Gehäuse 1 befindet sich zentral ein Wärmeaustauscher 3. Dieser Wärmetauscher besteht aus einer Anzahl von Wärmerohren 3a, die im Gehäuse 1 als Paket in Schräglage angeordnet sind. Die warmen Enden der Wärmerohre 3a liegen unten, und die kalten Enden liegen oben. Durch diesen Wärmeaustauscher 3 kann Frischluft in Richtung eines Pfeiles 5 von unten nach oben und verbrauchte Raumluft in Richtung eines Pfeiles 7 von oben nach unten durchströmen. Die Strömungskanäle sind geteilt mittels einer Trennwand. Außenseitig ist an das Gehäuse 1 ein Zuluftrohrflansch 11 angesetzt. Die Zuluft kann in Richtung eines Pfeil es 13 in den Rohrflansch einströmen, strömt dann in Richtung des Pfeiles 5 zu einem Gebläse 15 und verläßt die Vorrichtung nach dem Durchströmen eines Kondensators 17 in Richtung eines Pfeiles 19 zum Innenraum 21. Dieser Weg ist als Frischluftkanal bezeichnet.

Die verbrauchte Raumluft kann in Richtung von zwei Pfeilen 23 und 25 durch Eintrittsöffnungen 27 und 29 in die Vorrichtung 1 eintreten. Betrachtet wird zunächst einmal die Eintrittsöffnung 27, in die die verbrauchte Raumluft in Richtung des Pfeiles 23 eintritt. Diese verbrauchte Raumluft strömt in Richtung des Pfeiles 7 nach unten, in Richtung eines Pfeiles 31 durch einen Verdampfer 33 und durch ein Auslaßrohr 35 in Richtung eines Pfeiles 37 nach außen weg. Der Leitungszug, in dem die verbrauchte Abluft in Richtung der Pfeile 23, 7, 31 und 37 strömt, wird als Abluftkanal bezeichnet. Während das Gebläse 15 im Frischluftkanal für das Eindrücken der Frischluft in den Innenraum 21 sorgt, saugt ein Gebläse 39 die verbrauchte Raumluft nach draußen ab.

Die zum Einsatz kommende Wärmepumpe besteht aus dem Kompressor 41, dem Kondensator 17 und dem Verdampfer 33.

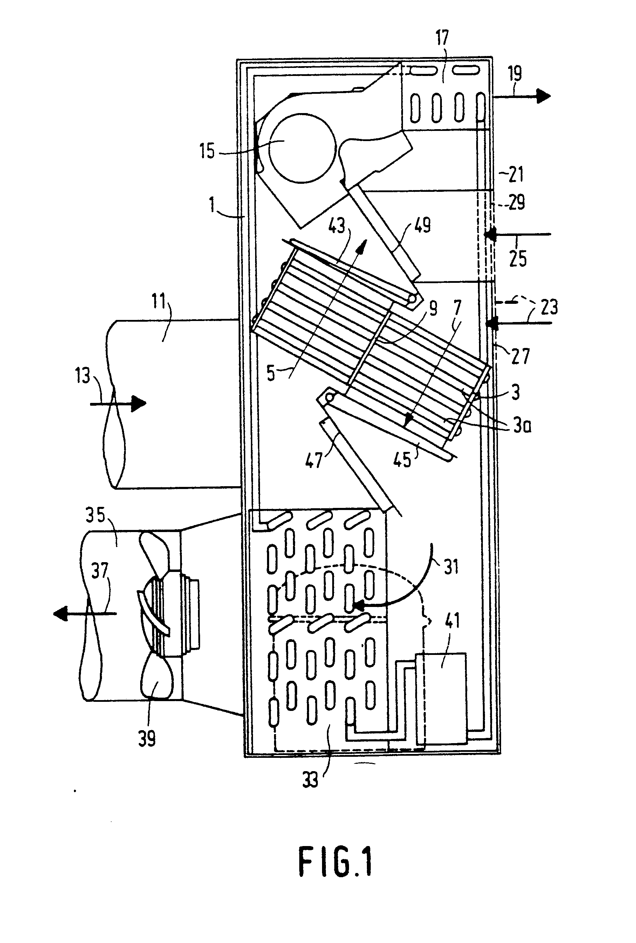

Der Luftführung innerhalb der Vorrichtung dienen je eine Klappe 43 im Frischluftkanal und 45 im Abluftkanal. Wenn die Klappe 43, wie in Fig. 1 dargestellt ist, an dem Wärmetauscher 3 anliegt, dann schließt sie den Frischluftkanal ab. Liegt die Klappe 45 am Wärmetauscher 3 an, dann schließt diese Klappe 45 den Abluftkanal ab. Die Stellungen der Klappen 43 und 45 nach Fig. 1 stellen die eine Endlage der Klappen 43, 45 dar. Zwischen Frischluft- und Abluftkanal sind noch Nebenschlußöffnungen 47 und 49 vorgesehen. Diese Nebenschlußöffnungen können mit Hilfe der Klappen 43 und 45 verschlossen werden. Liegen die Klappen 43 und 45 an den Nebenschlußöffnungen 47 und 49 an, dann haben die Klappen ihre zweite Endlage eingenommen.

Hat die Klappe 43 die Lage nach Fig. 1, dann ist die Nebenschlußöffnung 49 geöffnet, und die verbrauchte Raumluft kann in Richtung des Pfeiles 25 durch einen Rohrstutzen 51 unmittelbar über das Gebläse 15 in Richtung des Pfeiles 19 nach dem Passieren des Kondensators 17 und Aufnahme von Wärme aus ihm wieder in den Innenraum eingeführt werden.

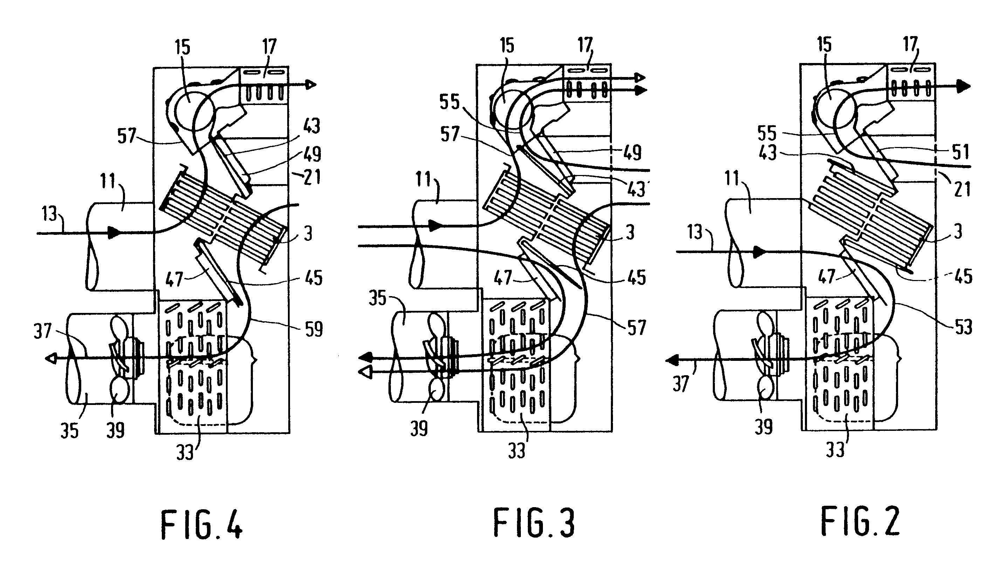

Die einzelnen Betriebszustände werden nun anhand der Fig. 2 bis 4 im einzelnen erläutert.

Fig. 2 zeigt die Stellung der Vorrichtung in der Stellung nach Fig. 1. in dieser Stellung findet ein reiner Heizbetrieb mit Hilfe der Wärmepumpe 17, 33, 41 statt. Die Klappen 43 und 45 verschließen den Durchlaß durch den Wärmetauscher 3. Das bedeutet, daß das Gebläse 39 die in Richtung des Pfeiles 13 in den Rohrflansch eingesaugte Frischluft in Richtung eines Pfeiles 53 durch die Nebenschlußöffnung 47 hindurch unmittelbar zum Verdampfer 33 und durch das Abluftrohr 37 wieder nach draußen abführt. Dieser angesauaten Frischluft wird also nur Wärme entzogen. Da die Klappe 43 ebenfalls den Wärmetauscher 3 verschließt, strömt die über den Rohrstutzen 51 eingesaugte Raumluft durch das Gebläse 15 und den Kondensator 17 in Richtung eines Pfeiles 55 wieder in den Innenraum zurück. Es handelt sich hier also um einen reinen Heizungsbetrieb, bei dem der Außenluft Wärme entzogen wird und diese entzogene Wärme mittels der Wärmepumpe zum Heizen des Innenraumes 21 ausgenutzt wird.

In Fig. 3 haben die Klappen 43 und 45 Zwischenstellungen eingenommen. In diesen Zwischenstellungen sind die Nebenschlußöffnungen 47 und 49 teilweise geöffnet, ebenso wie der Wärmetauscher 3. Das bedeutet, daß zusätzlich zu den Strömungen in Richtung der Pfeile 53 und 55 nach Fig. 2 für reinen Heizbetrieb noch Strömungen 57 und 59 für Lüftungsbetrieb hinzutreten. Es sind also sowohl die Frisch- und Abluftkanäle als auch die Nebenschlüsse teilweise geöffnet.

Fig. 4 zeigt die Klappen 43 und 45 in einer Stellung, in der sie die Nebenschlußöffnungen 47 und 49 vollständig verschließen. In diesem Fall kann die von den Gebläsen 15 und 39 geförderte Luft nur in Richtung der Pfeile 57 und 59 von außen nach innen und von innen nach außen strömen. Im Wärmetauscher wird der in Richtung des Pfeiles 59 abgesaugten Raumluft ihre Wärme entzogen. Diese Wärme wird an den Frischluftstrom 57 übergeben und damit wieder dem Innenraum 21 zugeführt.

Für die drei Betriebsstellungen sind also nur zwei Klappen erforderlich, die mit Hilfe von Steuervorrichtungen erstellt werden. Die Steuerung dieser Klappen ist außerordentlich einfach zu verwirklichen.

**Patentansprüche**

1. Vorrichtung zum Belüften und Heizen von Innenräumen, insbesondere Wohnräumen, mit von außen in den Innenraum (21) und aus dem Innenraum (21) nach außen führenden Frisch- und Abluftkanälen, in denen ein Luft/Luft-Wärmetauscher (3) vorgesehen und die mit Gebläsen (15, 39) versehen sind, durch die Luft ein- bzw.

ausgeblasen wird, und mit einer Wärmepumpenvorrichtung mit einem Kondensator (17) im Zuluftkanal (13, 17) und einem Verdampfer (33) im Abluftkanal sowie einstellbaren Klappen (43, 45), die auf einen reinen Luft/Luft-Wärmepumpenbetrieb ohne Luftaustausch von außen nach innen und umgekehrt oder einen Mischbetrieb aus Luftaustausch und Wärmepumpenbetrieb einstellbar sind, in dem sie vor und hinter dem Wärmetauscher (3) über Nebenschlußöffnungen (47, 49) Nebenschlüsse und längs der Frisch- und Abluftkanäle den Durchlaß regeln, wobei die Nebenschlüsse von Öffnungen zwischen dem Frischluft- und Abluftkanal gebildet werden, dadurch gekennzeichnet, daß

- nur je eine Klappe (43) vor und eine Klappe (45) hinter dem Wärmetauscher (3) vorgesehen ist,
- die Klappen (43, 45) in einer Endlage den Wärmetauscher (3) und in der anderen Endlage die Nebenschlußöffnungen (47, 49) vollständig schließen,
- die Klappen (43, 45) auf Zwischenstellungen einstellbar sind.

2. Vorrichtung nach Anspruch 1, dadurch gekennzeichnet, daß der Wärmetauscher (3) ein Wärmerohraustauscher ist.

3. Vorrichtung nach den Ansprüchen 1 und 2, dadurch gekennzeichnet, daß mehrere Wärmerohre (3a) zu einem von Luft durchströmbaren Paket zusammengefaßt sind, das im Gehäuse (1) in Schräglage angeordnet ist.

## Claims

1. An apparatus for the ventilation and heating of interior rooms, more specifically living rooms, comprising fresh air supply ducts and used air exhaust ducts leading into the interior room (21) and from the interior room (21), the ducts including an air-to-air heat exchanger (3) and being provided with blowers (15, 39) through which the air is blown into and extracted from, respectively, the room and a heat pump arrangement having a condensor (17) in the fresh air supply duct (13, 17) and an evaporator (33) in the discharge duct and also adjustable valves (43, 45) which can be witched to a pure air/air heat pump mode without air exchange from the outside to the inside and vice versa or a mixed operating mode consisting of air exchange and heat pump operation, in which they control before and behind the heat exchanger (3) the passage through by-passes via by-pass apertures (47, 49) and along the fresh air supply and used air exhaust ducts, the by-passes being constituted by apertures between the fresh air supply and used air exhaust ducts, characterized in that

- only one valve (43) is provided before and one valve (45) behind the heat exchanger (3),
- the valves (43, 45) completely close in a final position the heat exchanger (3) and in the other final position close the by-pass apertures (47, 49)
- the valves (43, 45) can be adjusted to intermediate positions.

2. An apparatus as claimed in Claim 1, characterized in that the heat exchanger (3) is a heat pipe exchanger.

3. An apparatus as claimed in Claims 1 and 2, characterized in that a plurality of heat pipes (3) are combined into a packet through which air can flow and which is provided in an oblique position in the housing (1).

## Revendications

1. Appareil pour la ventilation et le chauffage de locaux, en particulier de locaux d'habitation, comportant des conduits d'air frais et d'air d'évacuation qui vont de l'extérieur jusque dans le local (21) et du local (21) vers l'extérieur, contiennent un échangeur de chaleur air/air (3) et sont pourvus de ventilateurs (15, 39) par lesquels l'air est admis et est évacué, et un dispositif de pompe à chaleur avec un condenseur (17) dans le conduit d'air d'admission (13, 17) et un évaporateur (33) dans le conduit d'air d'évacuation, ainsi que des volets réglables (43, 45) qui peuvent être réglés sur un régime de pompe à chaleur air/air pur sans échange d'air de l'extérieur vers l'intérieur et inversement ou sur un régime mixte impliquant des échanges d'air et un fonctionnement de la pompe à chaleur, dans lesquels, en amont et en aval de l'échangeur de chaleur (3), ils règlent ces dérivations par l'intermédiaire d'ouvertures de dérivations (47, 49) et le passage le long des conduits d'air frais et d'air d'évacuation, les dérivations étant formées par des ouvertures entre les conduits d'air frais et d'air d'évacuation, caractérisé en ce que

- seuls sont prévus un volet (43) en amont de l'échangeur de chaleur (3) et un volet (45) en aval de celui-ci,
- les volets (43, 45) ferment complètement, l'échangeur de chaleur (3) dans une position d'extrémité et les ouvertures de dérivation (47, 49), dans l'autre position d'extrémité,
- les volets (43, 45) peuvent être réglés dans des positions intermédiaires.

2. Appareil suivant la revendication 1, caractérisé en ce que l'échangeur de chaleur (3) est un échangeur de chaleur à tubes.

3. Appareil suivant les revendications 1 et 2, caractérisé en ce que plusieurs tubes échangeurs de chaleur (3a) sont groupes en un paquet pouvant être traverse par l'air, qui est installé en position oblique dans l'habillage (1).

FIG.1

FIG.4　　　　FIG.3　　　　FIG.2

EP 0 127 213 B1